Europäisches Patentamt

European Patent Office

Office européen des brevets

(11) Veröffentlichungsnummer: **0 281 998**
**A2**

## (12) EUROPÄISCHE PATENTANMELDUNG

(21) Anmeldenummer: 88103606.5

(22) Anmeldetag: 08.03.88

(51) Int. Cl.4: **B27C 5/06** , B27C 9/04 ,
B27M 3/08

(30) Priorität: 12.03.87 DE 3708019

(43) Veröffentlichungstag der Anmeldung:
14.09.88 Patentblatt 88/37

(84) Benannte Vertragsstaaten:
AT CH ES FR GB IT LI

(71) Anmelder: WILHELM HIRSCH
HOLZBEARBEITUNGSMASCHINEN
Lichtensteinstrasse 11
D-7425 Hohenstein 3/Odenwaldstetten(DE)

(72) Erfinder: Hirsch, Wilhelm
Gerhard-Hauptmann-Strasse 47
D-7417 Pfullingen(DE)

(74) Vertreter: Möbus, Rudolf, Dipl.-Ing.
Hindenburgstrasse 65
D-7410 Reutlingen(DE)

(54) Vorrichtung zum Fräsen von Rundbogen aus Holz.

(57) Bei der Vorrichtung (15) zum Fräsen von Rundbogen (44) aus Holz mittels eines hochtourig angetriebenen Fräskopfes (16) einer Holzfräsmaschine (12) ist ein Rundbogen-Rohstück oder der Rundbogen (44) in mehreren Spannhaltern (35 - 40) gehalten, die auf mehreren Radialarmen (24 - 28) von Nabenköpfen (21 - 23) angeordnet sind, die um eine parallel zur Drehachse des Fräskopfes (16) verlaufende Tragsäule verschwenkbar oder drehbar gelagert sind. Die runde Tragsäule (20) ist zur Änderung des Abstandes vom Fräskopf (16) auf einem Schlitten (19) radial zum Fräskopf (16) verstellbar angeordnet.

Fig.1

EP 0 281 998 A2

## Vorrichtung zum Fräsen von Rundbogen aus Holz

Die Erfindung betrifft eine Vorrichtung zum Fräsen von Rundbogen aus Holz, insbesondere Rundbogenfenster, mit einem entsprechend dem gewünschten Bogenprofil profilierten, stationär galagerten und hochtourig angetriebenen Fräskopf.

Rundbogen aus Holz, wie sie insbesondere für Rundbogenfenster erforderlich sind, werden durch Rundfräsen eines mehreckigen Bogen-Rohstückes hergestellt, das aus einzelnen geradlinigen und auf Gehrung miteinander verbundenen Holzbrett-oder Holzstababschnitten zusammengesetzt ist. Bisher ist es üblich, eine genaue Schablone für den gewünschten Rundbogen herzustellen, die auf dem Bogen-Rohstück angebracht wird und die zur Anlage gegen eine koaxiale Führungsscheibe des Fräskopfes gebracht wird, wobei das Bogen-Rohstück auf einem Werkzeugtisch aufliegt. Dieses Herstellverfahren hat den Nacheil, daß es die Vorfertigung einer maßgenauen Schablone erforderlich macht.

Der Erfindung liegt die Aufgabe zugrunde, eine Vorrichtung der eingangs genannten Art so auszubilden, daß aus einem Rundbogen-Rohstück ohne Vorfertigung einer maßgenauen Schablone der Rundbogen maßgerecht ausgefräst werden kann.

Die gestellte Aufgabe wird erfindungsgemäß dadurch gelöst, daß die Vorrichtung mehrere Spannhalter für das Rundbogen-Rohstück aufweist, die jeweils an einem Radialarm in Längsrichtung dieses Armes und/oder senkrecht dazu verstellbar und feststellbar angeordnet sind, und daß die Radialarme einzeln oder paarweise von jeweils einem um eine gemeinsame Achse drehbaren Nabenkopf gehalten sind, wobei die zur Drehachse des Fräskopfes parallele gemeinsame Achse für die Nabenköpfe auf einem radial zum Fräskopf verstellbaren und feststellbaren Schlitten angeordnet ist.

Bei einer erfindungsgemäß ausgebildeten Vorrichtung wird das Rundbogen-Rohstück in mehrere, jeweils an einem der mehreren Radialarme angeordneten Spannhalter auf der Höhe des Fräskopfes und zentrisch zu der Nabenkopfachse eingespannt und der die Nabenkopfachse tragende Schlitten entlang einer Skala, an welcher der Abstand der Nabenkopfachse von der Fräskopfachse im Hinblick auf den gewünschten Bogenradius kontrollierbar ist, verschoben und in der richtigen Lage festgeklemmt. Anschließend läßt sich die Nabenkopfanordnung mit dem zentrisch eingespannten Rundbogen-Rohstück von Hand drehen und dabei das Rundbogen-Rohstück am Fräskopf entlang unter Erzielung des gewünschten Bogenprofiles um die Nabenkopfachse drehen; zur Erzielung des Innenprofiles am Fräskopf außen entlang, zur Erzielung des Außenprofiles am Fräskopf innen entlang. Vorteilhafterweise lassen sich die Spannhalter um mindestens 180° um ihre Längsachse verdrehen, so daß sie bei der Bildung des Rundbogenaußenprofiles innen am Rundbogen-Rohstück und bei der Bildung des Innenprofiles außen am Rundbogen-Rohstück ansetzbar sind. Mittels eines entlang der Verstellbahn des die gemeinsame Achse für die Nabenköpfe tragenden Schlittens angeordneten Maßstabs und auch mittels auf den Radialarmen ausgebildeten Maßstäben läßt sich jederzeit die zentrische Anordnung des Rundbogen-Rohstückes zur Nabenkopfachse kontrollieren.

Um eine sichere Halterung von Rundbogen-Rohstück für Rundbogen aller möglichen Radien sicherzustellen, kann die Vorrichtung zweckmäßig mehrere Nabenköpfe mit Radialarmen und an diesen Radialarmen verankerbaren Spannhaltern aufweisen, wobei mindestens einer der koaxial auf der gemeinsamen Achse frei drehbar angeordneten Nabenköpfe jeweils zwei miteinander fluchtende Radialarme aufweist, auf welchen die Spannhalter gemeinsam und auf gleichen Achsabstand verstellbar angeordnet sind, um somit eine zentrische Anordnung zur Nabenkopf-Drehachse zu erleichtern.

Zweckmäßig ist mindestens ein zusätzlicher Nabenkopf mit zwei Radialarmen vorgesehen, die in einer gemeinsamen Ebene unter einem veränderbaren Winkel zueinander verlaufen. Außerdem kann die Vorrichtung vorteilhafterweise mit einem zusätzlichen und frei schwenkbaren Arm versehen sein, auf welchem ein Sägekopf oder Fräskopf zum Abtrennen eines Glasstabes vom Rundbogenprofil verstellbar befestigbar ist.

Die Spannhalter der Vorrichtung können auf unterschiedliche Weise ausgebildet sein, beispielsweise einen feststehenden und einen mittels einer Kolben/Zylinder-Anordnung beweglichen Spannbacken aufweisen.

Nachfolgend wird ein Ausführungsbeispiel einer erfindungsgemäß ausgebildeten Vorrichtung anhand der beiliegenden schematischen Zeichnung näher erläutert.

Im einzelnen zeigen:

Fig. 1 eine schematische Seitenansicht der Vorrichtung;

Fig. 2 eine schematische Draufsicht auf die Vorrichtung;

Fig. 3 eine Teildraufsicht beim Ansatz des Fräskopfes an der inneren Rundbogenseite;

Fig. 4 eine Teildraufsicht beim Ansatz des Fräskopfes an der äußeren Rundbogenseite;

Fig. 5 eine Draufsicht auf ein Rundbogen-Rohstück;

Fig. 6 den Querschnitt eines Rundbogens bei angesetztem Sägekopf zum Abtrennen eines Glasstabes vom vorgefertigten Bogenprofil.

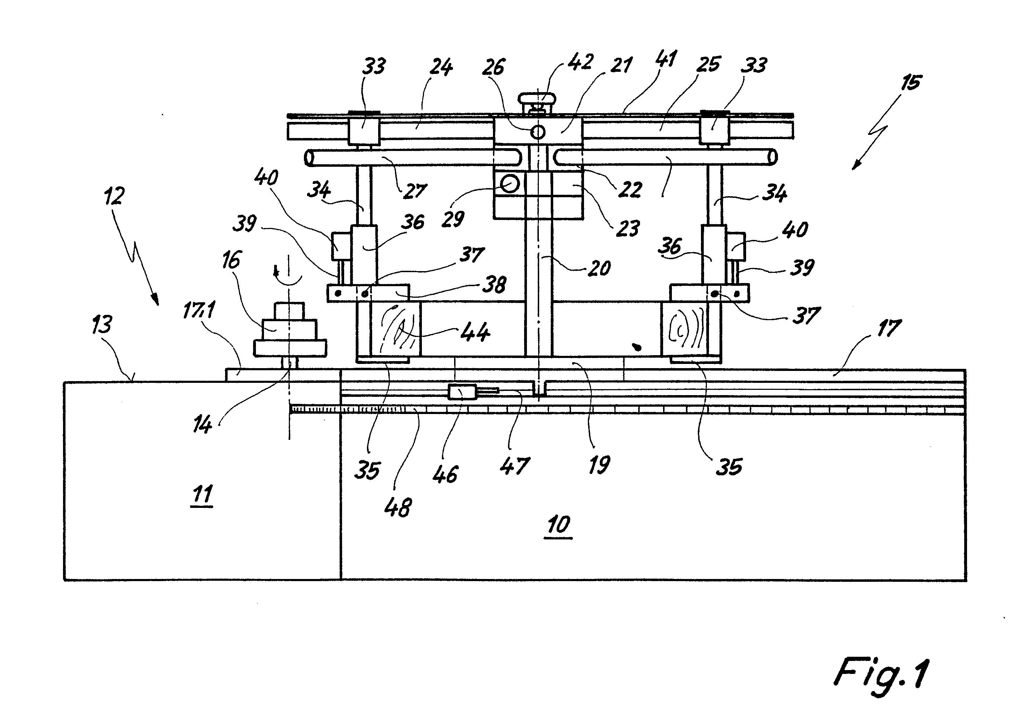

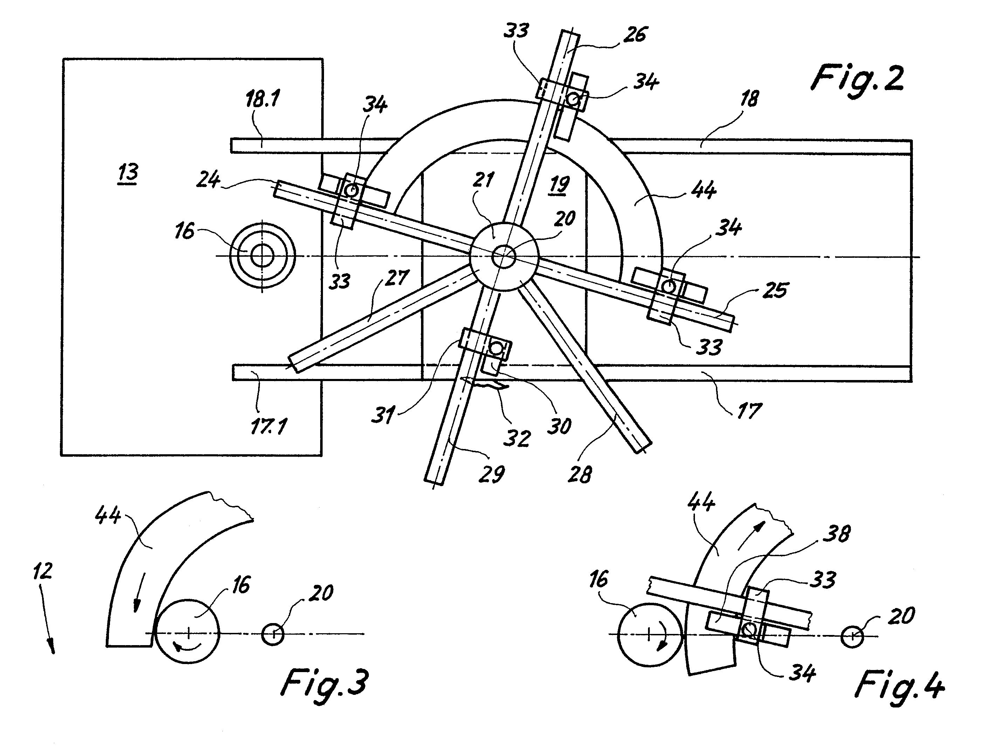

Die Fig. 1 und 2 zeigen jeweils eine schematische Gesamtdarstellung der Vorrichtung. Sie weist einen Maschinenkörper 10 auf, der an den Maschinenkörper 11 einer Holzfräsmaschine 12 ansetzbar ist, über deren Werkstückauflagefläche 13 auf einer Vertikalspindel 14 ein hochtourig antreibbarer Fräskopf 16 mit passender Profilierung auswechselbar angeordnet ist. Die mit ihrem Körper 10 an die Holzfräsmaschine 12 ansetzbare Vorrichtung 15 kann also als Zusatzvorrichtung ausgebildet sein. Auf dem Maschinenkörper 10 sind auf der Oberseite zwei Führungsschienen 17 und 18 zur leichten und verkantungssicheren Führung eines Schlittens 19 ausgebildet, die mit Endabschnitten 17.1 und 18.1 bis auf die Werkstückauflagefläche 13 der Fräsmaschine 12 reichen können, aber nicht müssen. Auf dem Schlitten 19 ist eine vertikale Rundsäule 20 befestigt, welche die Drehachse für mehrere koaxial übereinander angeordnete Nabenköpfe 21, 22, 23 bildet. Jeder Nabenkopf ist mit mindestens einem Radialarm versehen. Beim dargestellten Ausführungsbeispiel ist der oberste Nabenkopf 21 mit zwei miteinander fluchtenden Radialarmen 24 und 25 und einem senkrecht zu diesen beiden Radialarmen 24 und 25 verlaufenden Radialarm 26 versehen. Der nächste Nabenkopf 22 weist zwei Radialarme 27 und 28 auf, die unter einem Winkel von kleiner 180° zueinander verlaufen, der veränderbar ist. Die beiden Radialarme 27 und 28 sind also relativverschwenkbar im Nabenkopf 22 angeordnet. Im nächsten Nabenkopf 23 ist ein Arm 29 angeordnet. An diesem Arm ist gemäß Fig. 2 über einen Tragkopf 31 ein Sägekopf 30 mit einer Sägescheibe 32 befestigt, deren Bedeutung später erläutert wird.

An jedem Tragarm sind in Längsrichtung der Tragarme verstellbare Halteköpfe 33 anordenbar, die auf den Radialarmen 24 - 29 auch feststellbar sind. Von diesen Halteköpfen 33 ragt jeweils eine Tragstange 34 nach unten bis auf die Höhe des Fräskopfes 16 der Holzfräsmaschine 12. Jede Tragstange 34 endet in einem aus Fig. 1 ersichtlichen, querverlaufenden Spannbacken 35, und auf jeder Tragstange 34 ist an einer Hülse 36 ein um einen Schwenkpunkt 37 verschwenkbarer beweglicher Spannbacken 38 angeordnet, der mittels der Kolbenstange 39 eines Pneumatikzylinders 40 bewegbar ist. Der unbewegliche Spannbacken 35 kann auch mit dem Halter 36 verbunden sein. Die Radialarme 27 und 28 des Nabenkopfes 22 sind ohne Spannhalter 36 dargestellt, können aber ebenfalls mit solchen Spannhaltern bestückt werden, wobei die Halteköpfe 33 sich über die freien Enden der Radialarme aufschieben lassen. In nicht dargestellter Weise ist jeder Haltekopf 33 mit einer Festspannvorrichtung und jeder Haltearm mit einer Maßskala, welche die Entfernung von der Drehachse der Nabenköpfe anzeigt, versehen. Am Körper 10 sind entlang der Schlittenverstellbahn ein Maßstab 48 und eine Führungsschiene 47 für verstellbare Anschläge 46 angeordnet.

Beim dargestellten Ausführungsbeispiel sind die auf den beiden Radialarmen 24 und 25 des obersten Nabenkopfes 21 angeordneten Halteköpfe 33 mittels eines gemeinsamen Spindelantriebes 41/42 oder eines gemeinsamen Kettenantriebes in ihrer Verstellbewegung zwangsgekoppelt, so daß sichergestellt ist, daß die Halteköpfe 33 immer den gleichen Abstand von der Drehachse des Nabenkopfes 21 einnehmen.

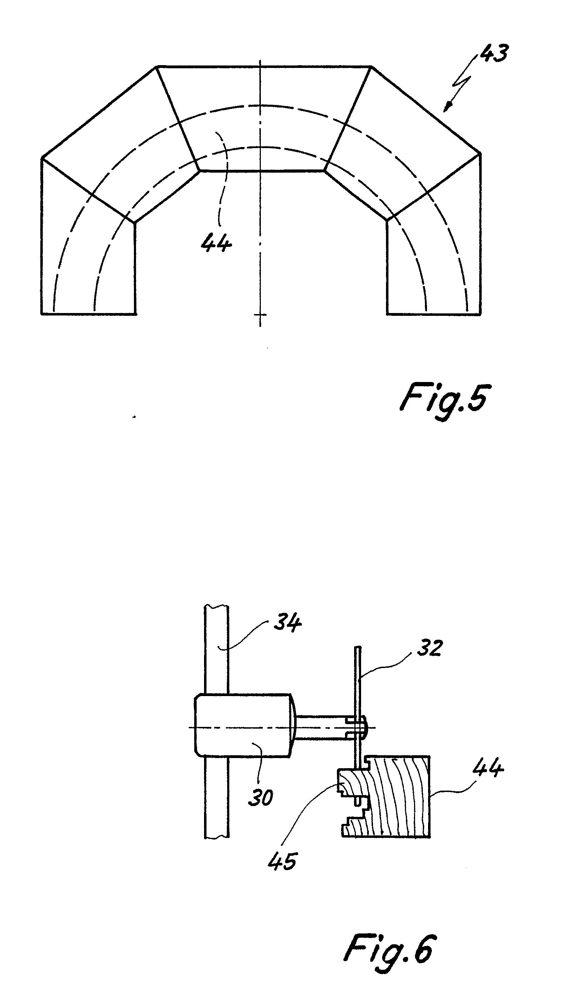

Diese gemeinsame Verstellbarkeit kann für die Halteköpfe aller Nabenköpfe vorgesehen werden. Die an den Halteköpfen 33 befestigten Haltestangen 34 lassen sich in nicht dargestellter Weise um mindestens 180° um ihre Längsachse drehen, so daß sie sowohl die aus Fig. 1 ersichtliche Spannstellung, in denen sie von außen gegen ein aus Fig. 5 ersichtliches Rundbogen-Rohstück 43 oder den daraus gebildeten Rundbogen 44 anliegen, als auch gemäß Fig. 4 eine von innen gegen ein Rundbogen-Rohstück 43 oder einen Rundbogen 44 anliegende Stellung einnehmen können.

In den Fig. 1 und 2 ist der besseren Übersichtlichkeit halber ein bereits fertiggestellter Rundbogen 44 eingezeichnet, der aus einem aus Fig. 5 ersichtlichen Rundbogen-Rohstück mittels Fräsköpfen 16 gefertigt worden ist. Zunächst wird natürlich das Rundbogen-Rohstück 43 im Spannhalter 36 zentrisch zur Rundsäule 20 eingespannt, wobei beim dargestellten Ausführungsbeispiel auf den Radialarmen 24, 25 und 26 angeordnete Spannhalter 36 Verwendung finden. Es könnten aber zusätzlich auch noch Spannhalter angesetzt werden, die auf den Radialarmen 27 und 28 angeordnet werden.

Nach dem zentrischen Einspannen des Rundbogen-Rohstückes 43 wird der Schlitten mit der Rundsäule 20 soweit verfahren, daß das Rundbogen-Rohstück 43 in den Wirkungsbereich des Fräskopfes 16 gelangt. Zur Bildung des Innenbogens wird der Rundbogen 44 bzw. das Rundbogen-Rohstück 43 gemäß Fig. 3 außen am Fräskopf 16 vorbeibewegt, so daß also der Fräskopf 16 zwischen dem Werkstück und der Tragsäule 20 angeordnet ist. Zur Bildung des Außenbogens wird dagegen der Rundbogen 44 gemäß Fig. 4 an der Innenseite eines Fräskopfes 16 vorbeibewegt, wobei die Schwenkbewegung des Rundbogens 44 bzw. des Rundbogen-Rohstückes 43 um die Achse der Tragsäule 20 immer entgegen der Drehrichtung des Fräskopfes 16 erfolgt, wie in Fig. 3 und 4 durch Pfeile angedeutet ist. Bei Rundbogenfenstern werden zur Herstellung des Innenbogens und zur Herstellung des Außenbogens des Rundbogens 44 in der Regel unterschiedlich profilierte Fräsköpfe 16 verwendet.

Bei der erfindungsgemäß ausgebildeten Vorrichtung 15 ist das Werkstück, nämlich das Rundbogen-Rohstück 43 und der daraus gefertigte Rundbogen 44, zwischen mehreren Spannhaltern 36 unterschiedlicher Radialarme sicher und zentrisch zur Rundsäule 20 gehalten und liegt während des Fräsvorganges nicht auf der Auflagefläche 13 der Fräsmaschine 12 auf.

In der Vorrichtung 15 ist am Nabenkopf 23 auf der Haltestange 29 über den Tragkopf 31 und ebenfalls eine Tragstange 34 ein einen Antriebsmotor aufweisender Sägekopf 30 gelagert, der ein Sägeblatt 32 antreibt. Nach der Fertigstellung des Rundbogens 44 kann durch Verschwenken des Nabenkopfes 23 mit der Haltestange 29 die Sägescheibe 32 am Innenprofil des Rundbogens 24 entlangbewegt werden, um vom Innenprofil gemäß Fig. 6 einen Vorsprung 45 abzutrennen, der dann als gekrümmte Glasleiste bei der Verwendung des Rundbogens 44 als Rundfensterbogen dienen kann. Das Abtrennen der Glasleiste 45 erfolgt also in der gleichen Vorrichtung 16.

## Ansprüche

1. Vorrichtung zum Fräsen von Rundbogen aus Holz, insbesondere Rundbogenfenster, mit einem entsprechend dem gewünschten Bogenprofil profilierten, stationär gelagerten, hochtourig angetriebenen Fräskopf, dadurch gekennzeichnet, daß sie mehrere Spannhalter (35 - 40) für das Rundbogen-Rohstück (43) aufweist, die jeweils an einem Radialarm (24 - 28) in Längsrichtung dieses Armes und/oder senkrecht dazu verstellbar und feststellbar angeordnet sind, und daß die Radialarme (24 - 28) einzeln oder paarweise jeweils in einem um eine gemeinsame Achse (Rundsäule 20) drehbaren Nabenkopf (21 - 23) gehalten sind, wobei die zur Drehachse des Fräskopfes (16) parallele gemeinsame Achse für die Nabenköpfe (21 - 23) auf einem radial zum Fräskopf (16) verstellbaren und feststellbaren Schlitten (19) angeordnet ist.

2. Vorrichtung nach Anspruch 1, dadurch gekennzeichnet, daß die Spannhalter (35 - 40) jeweils am Ende von parallel zur gemeinsamen Achse (Rundsäule 20) der Nabenköpfe (21 - 23) ausgerichteten Tragstangen (34) ausgebildet sind, die mindestens 180° um ihre Längsachse verdrehbar angeordnet sind.

3. Vorrichtung nach Anspruch 1 oder 2, dadurch gekennzeichnet, daß mindestens einer der koaxial auf der gemeinsamen Achse (Rundsäule 20) frei drehbar angeordneten Nabenköpfe (21 - 23) jeweils zwei miteinander fluchtende Radialarme (24, 25) und mindestens ein Nabenkopf (22) zwei Radialarme (27, 28), die in einer gemeinsamen Ebene unter einem veränderbaren Winkel zueinander verlaufen, aufweist.

4. Vorrichtung nach Anspruch 3, dadurch gekennzeichnet, daß mindestens die auf den miteinander fluchtenden Radialarmen (24, 25) des einen Nabenkopfes (21) angeordneten Halteköpfe (33) für die Spannhalter (35 - 40) gemeinsam und auf gleichen Achsabstand verstellbar angeordnet sind.

5. Vorrichtung nach einem der Ansprüche 1 bis 4, dadurch gekennzeichnet, daß sie zusätzlich einen frei schwenkbaren Arm (29) zur verstellbaren Anordnung eines Sägekopfes (30) oder Fräsköpfe zum Abtrennen eines Glasstabes (45) vom fertigen profilierten Rundbogen (44) aufweist.

6. Vorrichtung nach einem der Ansprüche 1 bis 5, dadurch gekennzeichnet, daß entlang der Verstellbahn für den die gemeinsame Achse (Rundsäule 20) für die Nabenköpfe (21 - 23) tragenden Schlitten (19) ein die Entfernung der Achse von der Fräskopfachse anzeigender Maßstab (48) und parallel dazu maßgenau verstellbare Anschläge (46) vorgesehen sind.

7. Vorrichtung nach einem der Ansprüche 1 bis 6, dadurch gekennzeichnet, daß die Spannhalter jeweils einen feststehenden (35) und einen mittels einer Kolben/Zylinder-Anordnung (40) beweglichen Spannbacken (38) aufweisen.

Fig.1

0 281 998

Fig.2

Fig.3

Fig.4

*Fig.5*

*Fig.6*